# EUROPEAN PATENT SPECIFICATION

(11) **EP 2 405 120 B1**
(45) Date of publication and mention of the grant of the patent: **10.07.2019**
(21) Application number: 10848422.1
(22) Date of filing: 26.03.2010
(51) Int. Cl.: F02D 41/04, F02D 43/00, F02D 45/00

(54) **COMBUSTION CONTROLLER FOR INTERNAL COMBUSTION ENGINE**
VERBRENNUNGSSTEUERUNG FÜR EINEN VERBRENNUNGSMOTOR
DISPOSITIF DE COMMANDE DE COMBUSTION POUR MOTEUR À COMBUSTION INTERNE

(43) Date of publication of application: 11.01.2012
(73) Proprietor: TOYOTA JIDOSHA KABUSHIKI KAISHA, Toyota-shi, Aichi-ken, 471-8571 (JP)
(72) Inventor: NADA, Mitsuhiro, Toyota-shi Aichi 471-8571 (JP)
(74) Representative: TBK
(86) International application number: PCT/JP2010/055397
(87) International publication number: WO 2011/118029

(56) References cited:
- JP-A- 8 218 920
- JP-A- 2002 161 796
- JP-A- 2004 003 415
- JP-A- 2005 299 530
- JP-A- 2009 047 014
- US-A- 5 732 554
- US-A- 6 158 413

## Description

### [Technical Field]

The present invention relates to a combustion control apparatus for a compression self-ignition internal combustion engine represented by a diesel engine.

### [Background Art]

In diesel engines used for, for example, automobile engines, etc., the form of combustion in a combustion chamber (in a cylinder) is controlled by adjusting the timing and amount of fuel injection from a fuel injection valve (hereinafter sometimes referred to as an injector) according to the engine speed, amount of accelerator operation, coolant temperature, intake air temperature, etc.

As disclosed in Patent Literature 1 below, combustion of a diesel engine is mainly executed in the form of premixed combustion and diffusion combustion. When fuel injection from an injector into a combustion chamber is started, first, a combustible air-fuel mixture is generated due to evaporative diffusion of fuel (an ignition delay period). Next, this combustible air-fuel mixture undergoes self-ignition nearly simultaneously at several locations in the combustion chamber, and combustion progresses rapidly (premixed combustion). Further, the injection of fuel into the combustion chamber continues, so combustion is executed continuously (diffusion combustion). Thereafter, since unburnt fuel is still present after fuel injection is terminated, heat generation continues for a while (an afterburning period).

Meanwhile, in diesel engines, it is important to concurrently satisfy demands such as improving exhaust emissions by suppressing both the amount of NOx generated and the amount of smoke generated, reducing combustion noises generated during a combustion stroke, and ensuring sufficient engine torque.

For suppressing the amount of NOx generated, an exhaust gas recirculation (EGR) device that recirculates part of an exhaust gas in an intake path is known (for example, see Patent Literature 2 below). In such an EGR device, the oxygen concentration in a cylinder is lowered by recirculating exhaust gas into the cylinder (combustion chamber) to promote the ignition delay and increase the proportion of premixed combustion, thereby suppressing NOx generating and improving exhaust emissions.

Furthermore, Patent Literature 3 discloses a combustion control apparatus according to the preamble of claim 1.

### [Citation List]

### [Patent Literature]

[PTL 1] JP 2004-156519 A
[PTL 2] JP 2004-003415 A
[PTL 3] US 6 158 413 A

### [Disclosure of Invention]

### [Technical Problems]

As described above, for suppressing the amount of NOx generated, it is effective to recirculate part of exhaust gas in an intake path to reduce the oxygen concentration in a cylinder, but since smoke is generated as the oxygen concentration in a cylinder is reduced, there is a limit to the reduction in oxygen concentration in a cylinder. On the other hand, for suppressing the amount of smoke generated, there is a method for reducing the combustion rate by increasing a fuel injection pressure to enhance space utilization (expand a combustion site), but since NOx is increased as a fuel injection pressure is increased, it is difficult to reduce the amount of NOx generated while suppressing the amount of smoke generated.

For achieving both suppression of the amount of smoke generated and suppression of the amount of NOx generated, there is a method that reduces the temperature in a cylinder by water cooling or air cooling for example, but in this case, there is a limit to coping with a load increase (increase in the amount of heat released).

The present invention has been achieved in view of the above, and an object of the invention is to provide a combustion control apparatus for an internal combustion engine that is capable of concurrently suppressing the amount of smoke generated and the amount of NOx generated.

### [Means for Solving the Problems]

According to the present invention, the above object is solved with a combustion control apparatus having the features of claim 1.

### - Principles of Solution -

First, in a compression self-igniting internal combustion engine, as the pre-ignition pressure in a cylinder is reduced, the gas pressure (molecular density), which attenuates the kinetic energy of a spray injected into a combustion chamber, is lowered, and enhancement of space utilization (expansion of a combustion site) lowers the rate of combustion, thereby promoting ignition delay and increasing the proportion of premixed combustion (that is, the proportion of premixed combustion can be increased while the minimum oxygen concentration that does not cause oxygen deficiency is maintained). Then, an increase in the proportion of premixed combustion can suppress the amount of smoke generated.

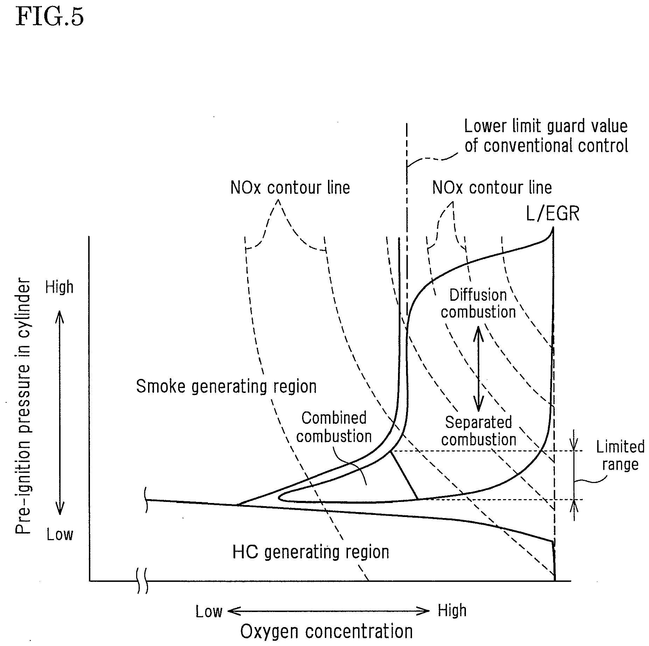

In view of this point, the inventors of the present invention reduced the oxygen concentration in a cylinder while the pre-ignition pressure in the cylinder had been reduced, and found that, unlike when the pre-ignition pressure in the cylinder is not regulated (a case where the pre-ignition pressure is not reduced), there is a region (specific region: the combined combustion region shown in FIG. 5) where smoke generation can be suppressed even when the oxygen concentration in the cylinder is further reduced. Accordingly, in the present invention, in the case where an emphasis is placed on reduction in emissions (in the case of placing an emphasis on emissions), the pre-ignition pressure in the cylinder is restricted to being low, and the oxygen concentration in the cylinder is lowered so as to reach the aforementioned specific region, thereby enabling the NOx generation amount to be as small as possible while suppressing smoke generation.

### - Solving Means -

Specifically, the present invention is premised on a combustion control apparatus for a compression self-ignition internal combustion engine in which fuel injected from a fuel injection valve into a cylinder is caused to combust in the cylinder, and a technical feature is that the combustion control apparatus for the internal combustion engine is provided with oxygen concentration regulating means that is capable of regulating an oxygen concentration in the cylinder before a fuel injection of the fuel injection valve; pressure regulating means that is capable of regulating a pre-ignition pressure in the cylinder; and gas state controlling means that, in the case where a specific region where the pre-ignition pressure in the cylinder is limited to being no more than a predetermined pressure and where no smoke is generated even when the oxygen concentration is reduced is targeted and the oxygen concentration in the cylinder and the pre-ignition pressure in the cylinder are put into a state of the specific region from a state in which the oxygen concentration in the cylinder and the pre-ignition pressure in the cylinder are higher than those in the specific region, sets the oxygen concentration in the cylinder and the pre-ignition pressure in the cylinder into a state of the specific region while avoiding a smoke generating region by lowering the pre-ignition pressure in the cylinder by the pressure regulating means and thereafter lowering the oxygen concentration in the cylinder by the oxygen concentration regulating means.

According to the aforementioned specific configuration, the amount of NOx generated can be reduced more than conventional control can while the amount of smoke generated is suppressed. That is, in the case where only the oxygen concentration in the cylinder is reduced to reduce the amount of NOx generated (in the case of conventional control), the smoke generating region is reached if the oxygen concentration in the cylinder is excessively reduced, and thus there is a limit to the amount of oxygen concentration reduction. In the present invention, however, the pre-ignition pressure in the cylinder is limited to being low to increase the proportion of premixed combustion as described above, thereby enabling smoke generation to be suppressed even when the level of oxygen concentration reduction in the cylinder is greater than that in conventional control, and thus reduction in the amount of NOx generated can be achieved. Accordingly, suppression of the amount of smoke generated and suppression of the amount of NOx generated can be concurrently achieved, thereby enabling exhaust emissions to be improved. Moreover, when the oxygen concentration in the cylinder and the pre-ignition pressure in the cylinder are put into a state of the aforementioned specific region (emission emphasized region) from a state in which the oxygen concentration in the cylinder and the pre-ignition pressure in the cylinder are higher than those in the specific region, the oxygen concentration is lowered while avoiding the smoke generating region by controlling lowering of the pre-ignition pressure in the cylinder and lowering of the oxygen concentration in the cylinder in combination, thereby enabling the pre-ignition pressure in the cylinder and the oxygen concentration in the cylinder to be set into a state of the specific region while suppressing smoke generation.

The lower limit of the reduced oxygen concentration in the cylinder in the specific region is defined by the smoke generating region and the HC (hydrocarbon) generating region (see FIG. 5).

Here, in the present invention, specific examples of control performed in the case where the oxygen concentration in the cylinder and the pre-ignition pressure in the cylinder are put into a state of the specific region from a state in which the oxygen concentration in the cylinder and the pre-ignition pressure in the cylinder are higher than those in the specific region include: control by which lowering of the oxygen concentration in the cylinder and lowering of the pre-ignition pressure in the cylinder are simultaneously controlled, so a state immediately before the smoke generating region is achieved, then the pre-ignition pressure in the cylinder is lowered, and the oxygen concentration in the cylinder is lowered.

In the present invention, in lowering the pre-ignition pressure in the cylinder, if the pre-ignition pressure in the cylinder is excessively lowered, the HC generating region may be reached, and therefore a guard value that takes the HC generating region in consideration is used to keep the pre-ignition pressure in the cylinder above the lower limit to prevent HC generation. In this case, the lower limit guard value of the pre-ignition pressure in the cylinder may be a fixed value, but it is preferable that the lower limit guard value is set variably. That is, when ignition delay occurs due to transient operation or fuel properties (for example, low-cetane fuel), HC is increased rapidly, and to prevent this, it is preferable to variably set a lower limit guard value according to the oxygen concentration in the cylinder before fuel injection. Specifically, in the case where the oxygen concentration in the cylinder is low, the lower limit guard value of the pre-ignition pressure in the cylinder is set to be higher than that of a case where the oxygen concentration in the cylinder is high. The oxygen concentration in the cylinder can be obtained based on the amount of intake air, temperature of intake air, supercharging pressure, EGR rate, etc.

In the present invention, in the case where the oxygen concentration in the cylinder and the pre-ignition pressure in the cylinder are put into a state in which the oxygen concentration in the cylinder and the pre-ignition pressure in the cylinder are higher than those in the specific region (emission emphasized region) from a state of the specific region, the oxygen concentration is raised while avoiding the smoke generating region by controlling adjustment of the oxygen concentration in the cylinder and adjustment of the pre-ignition pressure in the cylinder. Specifically, the oxygen concentration in the cylinder is raised first and then the pre-ignition pressure in the cylinder is raised, and thereby a state in which the oxygen concentration in the cylinder and the pre-ignition pressure in the cylinder are higher than those in the specific region is set while avoiding a smoke generating region.

In the present invention, a specific example of the oxygen concentration regulating means that is capable of regulating the oxygen concentration in the cylinder before fuel injection of a fuel injection valve is an exhaust gas recirculating device (EGR device) that recirculates part of the exhaust gas discharged into the exhaust system of the internal combustion engine into the intake system. The fuel combustion control apparatus is configured such that the oxygen concentration in the cylinder is lowered or raised by increasing or reducing the amount of exhaust gas recirculated into the intake system by the exhaust gas recirculating device.

In the present invention, a specific example of the pressure regulating means that is capable of regulating the pre-ignition pressure in the cylinder is a supercharging device that supercharges intake air in the intake system. The fuel combustion control apparatus is configured such that the pre-ignition pressure in the cylinder is lowered or raised by reducing or increasing the amount of intake air by the supercharging device. A specific example of the pressure regulating means is an intake air throttle valve (throttle valve) that regulates the amount of intake air in the intake system. The fuel combustion control apparatus is configured such that the pre-ignition pressure in the cylinder is lowered or raised by reducing or increasing the amount of intake air by the intake air throttle valve.

The fuel combustion control apparatus may be configured such that the pre-ignition pressure in the cylinder is lowered or raised by combination of reduction or increase in intake air amount by the supercharging device and reduction or increase in intake air amount by the intake air throttle valve.

In the case where the internal combustion engine is provided with a pressure varying mechanism that is capable of regulating the pressure in a cylinder, such as a variable valve timing (VVT) mechanism, the pre-ignition pressure in the cylinder may be lowered or raised by the pressure varying mechanism. The fuel combustion control apparatus may also be configured such that the pre-ignition pressure in the cylinder is lowered or raised by the combination of such a pressure varying mechanism and the aforementioned supercharging device and intake air throttle valve.

### [Effects of the Invention]

According to the present invention, in the case of attaining a combustion state that places an emphasis on emission reduction, lowering of the oxygen concentration in the cylinder and lowering of the pre-ignition pressure in the cylinder are combined, while targeting a specific region where the pre-ignition pressure in the cylinder is limited to being no more than a predetermined pressure and where no smoke is generated even when the oxygen concentration is reduced (region where the proportion of premixed combustion is large), to control the combustion form of the specific region while avoiding the smoke generating region, and thus suppression of the amount of smoke generated and suppression of the amount of NOx generated can be concurrently achieved, thereby enabling exhaust emissions to be improved.

### [Brief Description of Drawings]

FIG. 1 is a schematic configuration diagram of an engine and a control system to which the present embodiment is applied.
FIG. 2 is a cross-sectional diagram showing the combustion chamber of a diesel engine and its surroundings.
FIG. 3 is a block diagram showing the configuration of a control system such as an ECU.
FIG. 4 shows diagrams depicting combustion forms.
FIG. 5 is a diagram showing the relationship between the oxygen concentration in a cylinder and the pre-ignition pressure in the cylinder and a smoke generating region.
FIG. 6 is a three-dimensional illustration showing the relationship between the oxygen concentration in a cylinder and the proportion of premixed combustion and a smoke generating region.
FIG. 7 is an engine performance diagram.
FIG. 8 is a diagram showing an example of a control procedure employed when lowering the oxygen concentration in a cylinder and the pre-ignition pressure in the cylinder.
FIG. 9 is a diagram showing an example of a control procedure employed when raising the oxygen concentration in a cylinder and the pre-ignition pressure in the cylinder.
FIG. 10 is a diagram showing another example of a control procedure employed when lowering the oxygen concentration in a cylinder and the pre-ignition pressure in the cylinder.
FIG. 11 is a diagram showing another example of a control procedure employed when lowering the oxygen concentration in a cylinder and the pre-ignition pressure in the cylinder.
FIG. 12 is a diagram showing a yet another example of a control procedure employed when lowering the oxygen concentration in the cylinder and the pre-ignition pressure in the cylinder.

### [Mode for Carrying Out the Invention]

An embodiment of the invention is described below with reference to the drawings. In the present embodiment, a case will be described in which the invention is applied to a common rail in-cylinder direct injection multi-cylinder (for example, inline four-cylinder) diesel engine (compression self-igniting internal combustion engine) mounted in an automobile.

### - Engine configuration -

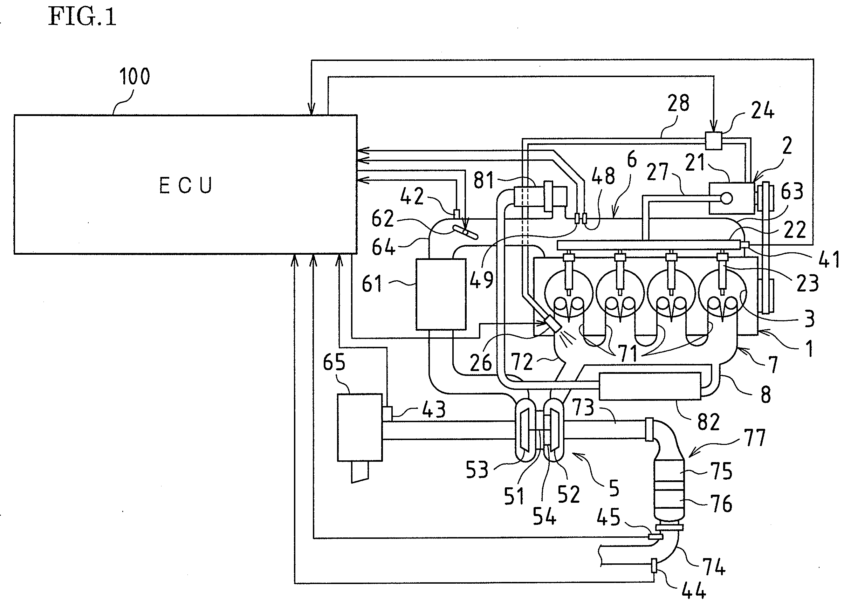

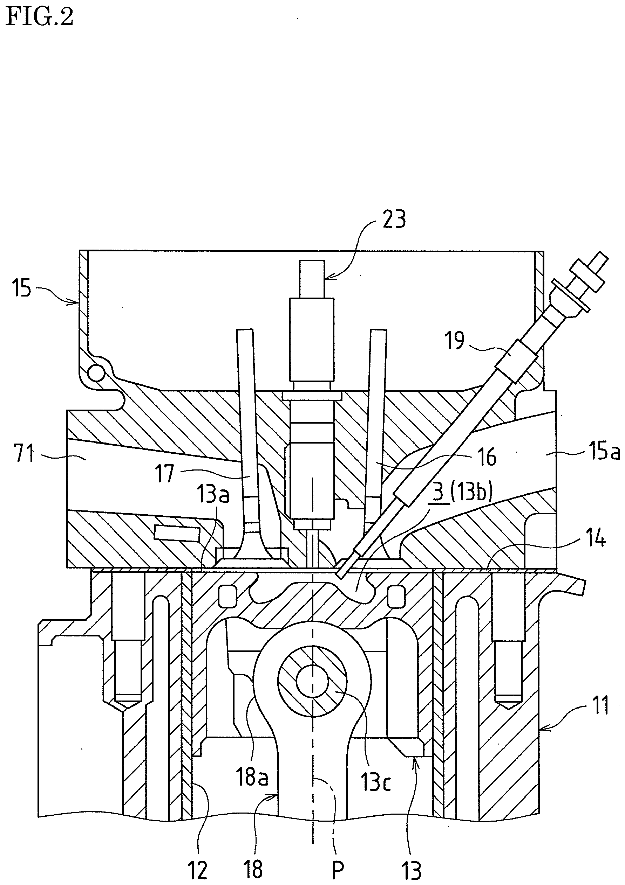

First, an example of a diesel engine (hereinafter simply referred to as an engine) to which the present invention is applied will now be. FIG. 1 is a schematic configuration diagram of an engine 1 and a control system thereof. FIG. 2 is a cross-sectional diagram showing a combustion chamber 3 of the diesel engine and parts in the vicinity of combustion chamber 3.

As shown in FIG. 1, the engine 1 of this embodiment is configured as a diesel engine system having a fuel supply system 2, combustion chambers 3, an intake system 6, an exhaust system 7, and the like as its main portions.

The fuel supply system 2 is provided with a supply pump 21, a common rail 22, injectors (fuel injection valves) 23, a cutoff valve 24, a fuel addition valve 26, an engine fuel path 27, an added fuel path 28, and the like.

The supply pump 21 draws fuel from a fuel tank, and after putting the drawn fuel under high pressure, supplies the fuel to the common rail 22 via the engine fuel path 27. The common rail 22 has a function as an accumulation chamber where the high pressure fuel supplied from the supply pump 21 is held (accumulated) at a specific pressure, and this accumulated fuel is distributed to each injector 23. The injectors 23 are configured from piezo injectors within which a piezoelectric element (piezo element) is provided, and supply fuel by injection into the combustion chambers 3 by appropriately opening a valve. The details of control of fuel injection from the injectors 23 will be described later.

Also, the supply pump 21 supplies part of the fuel drawn from the fuel tank to the fuel addition valve 26 via the added fuel path 28. In the added fuel path 28, the cutoff valve 24 is provided in order to stop fuel addition by cutting off the added fuel path 28 during an emergency.

The fuel addition valve 26 is configured from an electronically controlled opening/closing valve whose valve opening period is controlled with an addition control operation by an ECU 100 that will be described later such that the amount of fuel added to the exhaust system 7 becomes a target addition amount (an addition amount such that exhaust A/F becomes target A/F), or such that a fuel addition timing becomes a specific timing. In other words, a desired amount of fuel is supplied from the fuel addition valve 26 by injection to the exhaust system 7 (to an exhaust manifold 72 from exhaust ports 71) at a suitable timing.

The intake system 6 is provided with an intake manifold 63 connected to an intake port 15a formed in a cylinder head 15 (see FIG. 2), and an intake pipe 64 that constitutes an intake path is connected to the intake manifold 63. Also, in this intake path, an air cleaner 65, an airflow meter 43, and a throttle valve (intake air throttle valve) 62 are disposed in order from the upstream side. The airflow meter 43 outputs an electrical signal according to the amount of air that flows into the intake path via the air cleaner 65.

The exhaust system 7 is provided with the exhaust manifold 72 connected to the exhaust ports 71 formed in the cylinder head 15, and exhaust pipes 73 and 74 that constitute an exhaust path are connected to the exhaust manifold 72. Also, in this exhaust path a maniverter (exhaust purification apparatus) 77 is disposed that is provided with a NOx storage catalyst (NSR catalyst: NOx storage reduction catalyst) 75 and a diesel particulate-NOx reduction catalyst (DPNR catalyst) 76. Hereinafter, this NSR catalyst 75 and DPNR catalyst 76 will be described.

The NSR catalyst 75 is a storage reduction NOx catalyst and is configured using, for example, alumina (Al₂O₃) as a support, with, for example, an alkali metal such as potassium (K), sodium (Na), lithium (Li), or cesium (Cs), an alkaline earth element such as barium (Ba) or calcium (Ca), a rare earth element such as lanthanum (La) or yttrium (Y), and a precious metal such as platinum (Pt) supported on this support.

The NSR catalyst 75, in a state in which a large amount of oxygen is present in exhaust gas, stores NOx, and in a state in which the oxygen concentration in exhaust gas is low and a large amount of reduction component (for example, an unburned component of fuel (HC)) is present, reduces NOx to NO₂ or NO and releases the resulting NO₂ or NO. NOx that has been released as NO₂ or NO is further reduced due to quickly reacting with HC or CO in exhaust gas and becomes N₂. Also, by reducing NO₂ or NO, HC and CO themselves are oxidized and thus become H₂O and CO₂. In other words, by suitably adjusting the oxygen concentration or the HC component in exhaust gas introduced into the NSR catalyst 75, it is possible to purify HC, CO, and NOx in the exhaust gas. In the configuration of the present embodiment, adjustment of the oxygen concentration or the HC component in exhaust gas can be performed with an operation to add fuel from the fuel addition valve 26.

On the other hand, in the DPNR catalyst 76, a NOx storage reduction catalyst is supported on a porous ceramic structure, for example, and PM in exhaust gas is captured while passing through a porous wall. When the air-fuel ratio of the exhaust gas is lean, NOx in the exhaust gas is stored in the NOx storage reduction catalyst, and when the air-fuel ratio is rich, the stored NOx is reduced and released. Furthermore, a catalyst that oxidizes/burns the captured PM (for example, an oxidization catalyst whose main component is a precious metal such as platinum) is supported on the DPNR catalyst 76.

Here, the combustion chamber 3 of the diesel engine and parts in the vicinity of the combustion chamber 3 will be described with reference to FIG. 2. As shown in FIG. 2, in a cylinder block 11 that constitutes part of the engine, a cylindrical cylinder bore 12 is formed in each cylinder (each of four cylinders), and a piston 13 is housed within each cylinder bore 12 such that the piston 13 can slide in the vertical directions.

The combustion chamber 3 is formed on the top side of a top face 13a of the piston 13. In other words, the combustion chamber 3 is defined by a lower face of the cylinder head 15 installed on top of the cylinder block 11 via a gasket 14, an inner wall face of the cylinder bore 12, and the top face 13a of the piston 13. A cavity (recess) 13b is concavely provided in substantially the center of the top face 13a of the piston 13, and this cavity 13b also constitutes part of the combustion chamber 3.

The shape of this cavity 13b is such that the recess size of its center portion (on a cylinder centerline P) is small, and the recess size is increased toward the peripheral side. That is, as shown in FIG. 2, when the piston 13 is near the compression top dead center, the combustion chamber 3 formed by this cavity 13b is configured such that the combustion chamber is a narrow space having a relatively small volume at the center portion, and the space is gradually increased toward the peripheral side (has an enlarged space).

A small end 18a of a connecting rod 18 is linked to the piston 13 by a piston pin 13c, and a large end of the connecting rod 18 is linked to a crankshaft that is an engine output shaft. Thus, back and forth movement of the piston 13 within the cylinder bore 12 is transmitted to the crankshaft via the connecting rod 18, and engine output is obtained due to rotation of this crank shaft. Also, a glow plug 19 is disposed facing the combustion chamber 3. The glow plug 19 glows due to the flow of electrical current immediately before the engine 1 is started, and functions as a starting assistance apparatus whereby ignition and combustion are promoted due to part of a fuel spray being blown onto the glow plug.

In the cylinder head 15, the intake port 15a that introduces air into the combustion chamber 3 and the exhaust port 71 that discharges exhaust gas from the combustion chamber 3 are formed, and an intake valve 16 that opens/closes the intake port 15a and an exhaust valve 17 that opens/closes the exhaust port 71 are disposed. The intake valve 16 and the exhaust valve 17 are disposed facing each other on either side of a cylinder center line P. That is, the engine 1 of this embodiment is configured as a cross flow-type engine. Also, the injector 23 that injects fuel directly into the combustion chamber 3 is installed in the cylinder head 15. The injector 23 is disposed substantially in the center above the combustion chamber 3, in an erect orientation along the cylinder center line P, and injects fuel introduced from the common rail 22 toward the combustion chamber 3 at a specific timing.

Furthermore, as shown in FIG. 1, the engine 1 is provided with a turbocharger 5. This turbocharger 5 is equipped with a turbine wheel 52 and a compressor impeller 53 that are linked via a turbine shaft 51. The compressor impeller 53 is disposed facing the inside of the intake pipe 64, and the turbine wheel 52 is disposed facing the inside of the exhaust pipe 73. Thus the turbocharger 5 uses exhaust flow (exhaust pressure) received by the turbine wheel 52 to rotate the compressor impeller 53, thereby performing a so-called supercharging operation that increases the intake pressure. The turbocharger 5 of this embodiment is a variable nozzle-type turbocharger (VNT), in which a variable nozzle vane mechanism 54 is provided on the turbine wheel 52 side, and by adjusting the opening (VN opening) of this variable nozzle vane mechanism 54 it is possible to adjust the supercharging pressure of the engine 1.

An intercooler 61 for forcibly cooling intake air heated due to supercharging with the turbocharger 5 is provided in the intake pipe 64 of the intake system 6. The throttle valve 62 is provided further downstream relative to this intercooler 61. The throttle valve 62 is an electronically controlled opening/closing valve whose opening is capable of stepless adjustment, and has a function to constrict the area of the channel of intake air under specific conditions, and thus adjust (reduce) the amount of intake air supplied.

Also, the engine 1 is provided with an exhaust gas recirculation path (EGR path) 8 that connects the intake system 6 and the exhaust system 7.
The EGR path 8 decreases the combustion temperature by appropriately directing part of the exhaust gas back to the intake system 6 and resupplying that exhaust gas to the combustion chamber 3, thus reducing the amount of NOx generated. Also, provided in the EGR path 8 are an EGR valve 81 that by being opened/closed steplessly under electronic control is capable of freely adjusting the flow rate of exhaust gas that flows through the EGR path 8, and an EGR cooler 82 for cooling exhaust that passes through (recirculates through) the EGR path 8. The EGR device (exhaust gas recirculating device) is configured with this EGR path 8, EGR valve 81, EGR cooler 82, and the like.

### - Sensors -

Various sensors are installed at respective sites of the engine 1, and these sensors output signals related to environmental conditions at the respective sites and the operating state of the engine 1.

For example, the airflow meter 43 outputs a detection signal according to the flow rate of intake air (the amount of intake air) on the upstream side of the throttle valve 62 within the intake system 6. An intake temperature sensor 49 is disposed in the intake manifold 63 and outputs a detection signal according to the temperature of intake air. An intake pressure sensor 48 is disposed in the intake manifold 63 and outputs a detection signal according to the intake air pressure. An A/F (air-fuel ratio) sensor 44 outputs a detection signal that continuously changes according to the oxygen concentration in exhaust gas on the downstream side of the maniverter 77 of the exhaust system 7. An exhaust temperature sensor 45 likewise outputs a detection signal according to the temperature of exhaust gas (exhaust temperature) on the downstream side of the maniverter 77 of the exhaust system 7. A rail pressure sensor 41 outputs a detection signal according to the pressure of fuel (hereinafter sometimes referred to as fuel pressure) accumulated in the common rail 22. A throttle opening sensor 42 detects the opening of the throttle valve 62.

### -ECU-

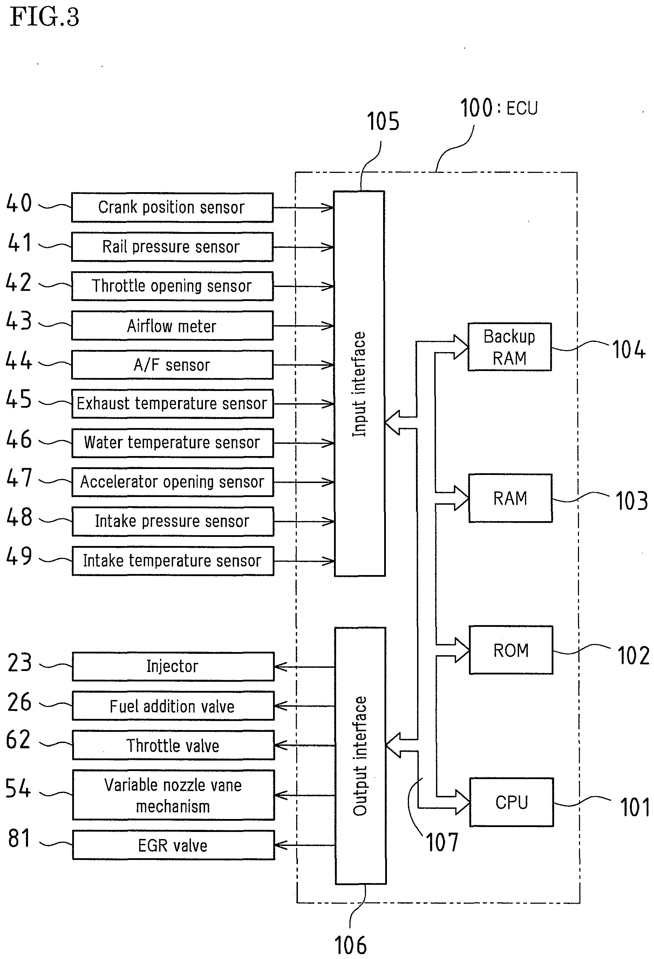

As shown in FIG. 3, the ECU 100 is provided with a CPU 101, a ROM 102, a RAM 103, a backup RAM 104, and the like. In the ROM 102, various control programs, maps that are referred to when executing those various control programs, and the like are stored. The CPU 101 executes various computational processes based on the various control programs and maps stored in the ROM 102. The RAM 103 is a memory that temporarily stores data resulting from computation with the CPU 101 or data that has been input from the respective sensors. The backup RAM 104 is a nonvolatile memory that stores that data or the like to be saved when the engine 1 is stopped, for example.

The CPU 101, the ROM 102, the RAM 103, and the backup RAM 104 are connected to each other via a bus 107, and are connected to an input interface 105 and an output interface 106 via the bus 107.

The input interface 105 is connected to the rail pressure sensor 41, the throttle position sensor 42, the airflow meter 43, the A/F sensor 44, the exhaust temperature sensor 45, the intake pressure sensor 48, and the intake temperature sensor 49. Furthermore, the input interface 105 is connected to a water temperature sensor 46 that outputs a detection signal according to the coolant temperature of the engine 1, an accelerator position sensor 47 that outputs a detection signal according to the amount of accelerator pedal depression, a crank position sensor 40 that outputs a detection signal (pulse) each time the output shaft (crankshaft) of the engine 1 rotates a specific angle, and the like.

On the other hand, the output interface 106 is connected to the injectors 23, the fuel addition valve 26, the throttle valve 62, the variable nozzle vane mechanism 54, the EGR valve 81, and the like.

The ECU 100 executes various controls of the engine 1 based on the output of the aforementioned various sensors. For example,, the ECU 100 executes fuel injection control of the injector 23. In this embodiment, auxiliary injections such as pilot injection and pre-injection that are performed in conventional ordinary diesel engines are not performed, and only a main injection for obtaining engine torque is performed as the fuel injection control of this injector 23. That is, neither pilot injection nor pre-injection is performed, and thus a cylinder preheating operation is not performed until a main injection is started.

The total fuel injection amount in this main injection is set as a necessary fuel injection amount for obtaining the required torque determined according to the operating state, such as engine speed, amount of accelerator operation, coolant temperature, and intake air temperature, as well as environmental conditions. For example, the greater the engine speed (engine speed calculated based on the value detected by the crank position sensor 40) or the greater the amount of accelerator operation (the amount of accelerator pedal depression detected by the accelerator position sensor 47) (i.e., the greater the accelerator opening), the greater the resulting torque requirement value of the engine 1.

### - Fuel injection pressure -

The fuel injection pressure when performing the aforementioned main fuel injection is determined based on the internal pressure of the common rail 22. In regard to the internal pressure of the common rail, normally, the higher the engine load and the greater the engine speed, the greater the target value for the pressure of fuel supplied from the common rail 22 to the injectors 23 (i.e., the target rail pressure). In other words, when the engine load is high, a large amount of air is drawn into the combustion chamber 3, making it necessary to inject a large amount of fuel into the combustion chamber 3 from the injectors 23, and therefore the pressure of injection from the injectors 23 needs to be high. Also, when the engine speed is high, the period during which injection is possible is short, making it necessary to inject a large amount of fuel per unit time, and therefore the pressure of injection from the injectors 23 needs to be high. In this way, the target rail pressure is normally set based on the engine load and the engine speed. This target rail pressure is set according to a fuel pressure setting map stored in, for example, the ROM 102. That is, determining the fuel pressure according to this fuel pressure setting map allows the valve opening period (injection rate waveform) of the injectors 23 to be controlled, and it is thus possible to specify the fuel injection amount during that valve opening period. In this embodiment, the fuel pressure is adjusted according to the engine load or the like so as to be between 30 MPa and 200 MPa.

The optimum values of fuel injection parameters for the main injection differ according to the temperature conditions of the engine 1, intake air, and the like.

For example, the ECU 100 adjusts the amount of fuel discharged by the supply pump 21 such that the common rail pressure becomes the same as the target rail pressure set based on the engine operating state, i.e., such that the fuel injection pressure matches the target injection pressure. Also, the ECU 100 determines the amount of fuel to be injected and the form of fuel injection based on the engine operating state. Specifically, the ECU 100 calculates an engine rotational speed (engine speed) based on the value detected by the crank position sensor 40, obtains an amount of accelerator pedal depression (accelerator opening degree) based on the value detected by the accelerator opening sensor 47, and determines the total main injection amount (injection amount in the main injections) based on the engine rotational speed, the accelerator opening, and the like.

### - Split main injections -

In the diesel engine 1, it is important to concurrently satisfy demands such as improving exhaust emissions by suppressing the amount of NOx generated and the amount of smoke generated, reducing combustion noises during a combustion stroke, and ensuring sufficient engine torque. As a means for simultaneously satisfying such demands, the inventors of the present invention, noting that it is effective to appropriately control the changing state of the heat production rate (changing state expressed as a heat production rate waveform) in a cylinder (combustion chamber) during a combustion stroke, found a fuel injection technique that uses split main injections, which is a technique for appropriately controlling the changing state of the heat production rate. The split main injections will now be described below.

In this embodiment, the fuel injection form (fuel injection pattern) of the main injection is continuously changed according to the change in engine load. Specifically, in the fuel injection control in this embodiment, two or three split main injections as injection forms of the main injection are performed, and the total main injection amount (the total amount of fuel injected for obtaining the required torque) required in the main injection is thus secured.

In split main injections, which are a feature of this embodiment, for combustion in the combustion chamber 3, a fuel injection for premixed combustion that is a fuel injection for mainly performing premixed combustion and a fuel injection for diffusion combustion that is a fuel injection for mainly performing diffusion combustion are each individually performed once or twice. The injection timing and the injection amount (injection pattern) of these split main injections are changed according to the engine load.

A predetermined interval is provided between the timing at which the fuel injection for premixed combustion is terminated and the timing at which the fuel injection for diffusion combustion is started. That is, after performing the fuel injection for premixed combustion, fuel injection is suspended (injector 23 is blocked), and after a predetermined interval, the main injection for diffusion combustion is started. For this interval, the shortest valve closing period that depends on the performance of the injector 23 (the shortest period from valve closure to the beginning of valve opening of the injector 23: for example, 200 ps) is set.

An outline of combustion forms in a combustion stroke in the combustion chamber 3 in this embodiment is as follows.

In this combustion form, premixed combustion and diffusion combustion are performed sequentially in the same combustion stroke. The combustion form can be classified into five types of combustion forms, i.e., "diffusion combustion", "separated combustion", "partial overlapping combustion", "full overlapping combustion", and "unified combustion."

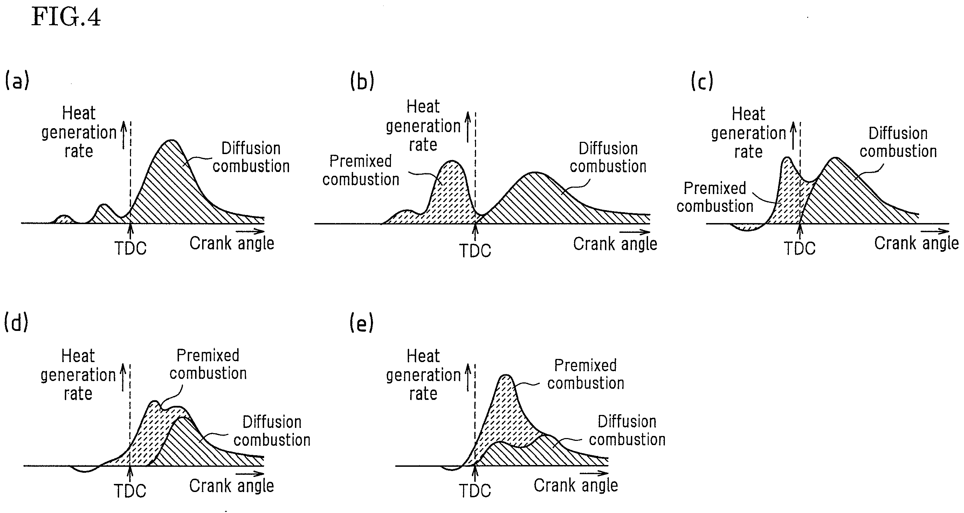

Here, the term "diffusion combustion" refers to a combustion form in which the main combustion of TDC (the compression top dead center of the piston 13) ignition is nearly 100% diffusion combustion (see the heat generation rate waveform shown in FIG. 4 (a)). The term "separated combustion" refers to a combustion form in which a premixed combustion region and a diffusion combustion region hardly overlap (see the heat generation rate waveform shown in FIG. 4 (b)). The term "partial overlapping combustion combustion" refers to a combustion form in which a premixed combustion region and a diffusion combustion region partially overlap (see the heat generation rate waveform shown in FIG. 4 (c)). The term "full overlapping combustion" refers to a combustion form in which a premixed combustion region and a diffusion combustion region are substantially the same (superposed) (see the heat generation rate waveform shown in FIG. 4 (d)). The term "unified combustion" refers to a combustion form in which the heat generation rate waveform of a premixed combustion region and that of a diffusion combustion region are unified (see the heat generation rate waveform shown in FIG. 4(e)).

The "diffusion combustion", "separated combustion", "partial overlapping combustion combustion", "full overlapping combustion", and "unified combustion" are set by adjusting a fuel injection pattern (fuel injection form) according to the engine load (or the required output of the engine 1).

### - Ignition timing of diffusion combustion -

In this embodiment, with the inside of the combustion chamber 3 being in a sufficiently preheated state due to premixed combustion resulting from the fuel injection for premixed combustion, the fuel injection for diffusion combustion is performed, and thus the fuel injected in the fuel injection for diffusion combustion undergoes thermal decomposition by being immediately exposed to a temperature environment having a self-igniting temperature or greater, and combustion starts immediately after injection.

Specifically, fuel ignition delay in a diesel engine includes physical delay and chemical delay. Physical delay refers to the time it takes fuel droplets to evaporate/mix, and depends on the gas temperature in the combustion field. On the other hand, chemical delay refers to the time it takes fuel vapor to chemically bond/decompose and to oxidatively generate heat. In a condition in which preheating of a cylinder is sufficient as described above, such physical delay is minimized, and as a result, ignition delay also is minimized.

Therefore, the combustion form of fuel injected in the fuel injection for diffusion combustion is mostly diffusion combustion because premixed combustion is hardly executed. Then, adjusting the injection timing and the injection amount of the fuel injection for diffusion combustion enables the ignition timing in diffusion combustion, the extent of change in heat generation rate (gradient of a heat generation rate waveform), the peak of a heat generation rate, and the time to reach the combustion centroid to be controlled concurrently.

### - Penetration -

Here a description of the relationship between fuel injection amount and penetration will now be provided. In the aforementioned injector 23, when a fuel injection is started in response to an injection command signal, a needle that blocks the nozzle retreats from the nozzle, thus gradually increasing the nozzle opening area. When the needle moves to the farthest retreating position, the largest nozzle opening area is reached. However, if the injection command signal is canceled before the needle reaches the farthest retreating position (if a valve closing command is received), the needle moves forward in a valve closing direction in the middle of the retreating movement. That is, in this case, a fuel injection is terminated without reaching the largest nozzle opening area. Therefore, the longer the injection period is set, the larger the nozzle opening area attained.

The nozzle opening area correlates with the travel distance of fuel (spray) injected from the nozzle. That is, in the case where fuel is injected when the nozzle opening area is large, the size of a fuel droplet injected from the nozzle is also large, and thus the kinetic energy is also large (penetration is large). Therefore, the travel distance of this fuel droplet is long. On the other hand, in the case where fuel is injected when the nozzle opening area is small, the size of a fuel droplet injected from the nozzle is also small, and thus the kinetic energy is also small (penetration is small). Therefore, the travel distance of this fuel droplet is short.

In the case where the valve opening period of the injector 23 is set to be relatively long (in other words, in the case where the injection amount per main injection is set to be relatively large), the needle moves to the farthest retreating position and therefore the largest nozzle opening area is reached, and the travel distance of the fuel droplet in this case is long. That is, most of fuel injected from the injector 23 is capable of traveling to near the peripheral edge of the aforementioned cavity 13b. There is also a restriction on the travel distance of a droplet of fuel injected from the injector 23 due to the shape of the combustion chamber, and thus there is a limit to the travel distance of the fuel droplet.

On the other hand, in the case where the valve opening period of the injector 23 is set to be relatively short (in other words, in the case where the injection amount per main injection is set to be relatively small), the needle does not move to the farthest retreating position and the nozzle opening area is small, and therefore the travel distance of the fuel droplet in this case is short. That is, most of fuel injected from the injector 23 is capable of traveling no farther than the central portion of the aforementioned cavity 13b.

As described above, the nozzle opening area determined by the valve opening period of the injector 23 and the travel distance of fuel (spray) injected from the nozzle correlate with each other. For this reason, the larger the injection amount in the fuel injection for premixed combustion is set, the longer the travel distance of fuel is, and fuel travels to near the peripheral edge of the cavity 13b. Therefore, a high rate of encounter with oxygen that is present in the combustion chamber 3 is secured, and it is thus possible to overcome oxygen shortage. As a result, the amount of smoke generated can be suppressed. That is, the larger the injection amount in the fuel injection for premixed combustion is set, the larger the space in the combustion chamber 3 the fuel is injected to. Therefore, combustion is performed without resulting in oxygen shortage, and it is thus possible to suppress the amount of smoke generated.

### - Reduction control on oxygen concentration in cylinder-

A feature of this embodiment is to use the oxygen concentration in a cylinder and the pre-ignition pressure in the cylinder before fuel injection as parameters for setting a gas state in the cylinder before fuel injection and, in the case of attaining a combustion state that places an emphasis on emission reduction, for example, upon urban driving (mode driving), the pre-ignition pressure in the cylinder is restricted to being low, and the oxygen concentration in the cylinder is lowered so as to be in a specific region, which will be described below, thereby enabling the NOx generation amount to be reduced as much as possible while suppressing smoke generation. Hereinafter, this technical idea will now be described.

First, as described above, as the pre-ignition pressure in a cylinder is reduced, the gas pressure (molecular density), which attenuates the kinetic energy of a spray injected into the combustion chamber 3, is lowered, and enhancement of space utilization (expansion of a combustion site) lowers the rate of combustion, thereby promoting ignition delay and increasing the proportion of premixed combustion. Then, an increase in the proportion of premixed combustion can suppress smoke generation.

Noting this point, the inventors of the present invention used the oxygen concentration in the cylinder and the pre-ignition pressure in the cylinder before fuel injection as parameters and carried out an experiment or a simulation or the like in which the pre-ignition pressure in the cylinder was changed, and every time the "pre-ignition pressure in the cylinder" was changed, the oxygen concentration in the cylinder was increased or decreased, and a smoke generating region was checked. Then, the inventors found that, as shown in FIG. 5, in the case where the pre-ignition pressure in the cylinder is within a specific limited range (for example, 4 MPa to 3 MPa), there is a region that causes the smoke generating region to be shifted toward the low oxygen concentration side and causes the smoke generating region not to be reached even when the oxygen concentration in the cylinder is reduced (specific region: for example, a region where the oxygen concentration is 14% to 17%). This specific region is a region of a combustion form resulting from the increased proportion of premixed combustion due to increased ignition delay by the reduction in pre-ignition pressure in the cylinder (a region where diffusion combustion and premixed combustion overlap or unify). Hereinafter, this specific region may also be referred to as a "combined combustion region."

In this embodiment, as shown in FIG. 5, the relationship between the oxygen concentration in the cylinder and the pre-ignition pressure in the cylinder and the respective regions such as a smoke generating region is mapped, and such a map is stored in, for example, the ROM 102 of the ECU 100.

In this embodiment, in the case of attaining a combustion state that places an emphasis on emission reduction, the oxygen concentration in the cylinder (before fuel injection) is lowered while the pre-ignition pressure in the cylinder is limited to being low such that the combined combustion region is reached, and it is thus possible to reduce the amount of NOx generated more than conventional techniques can while suppressing smoke generation.

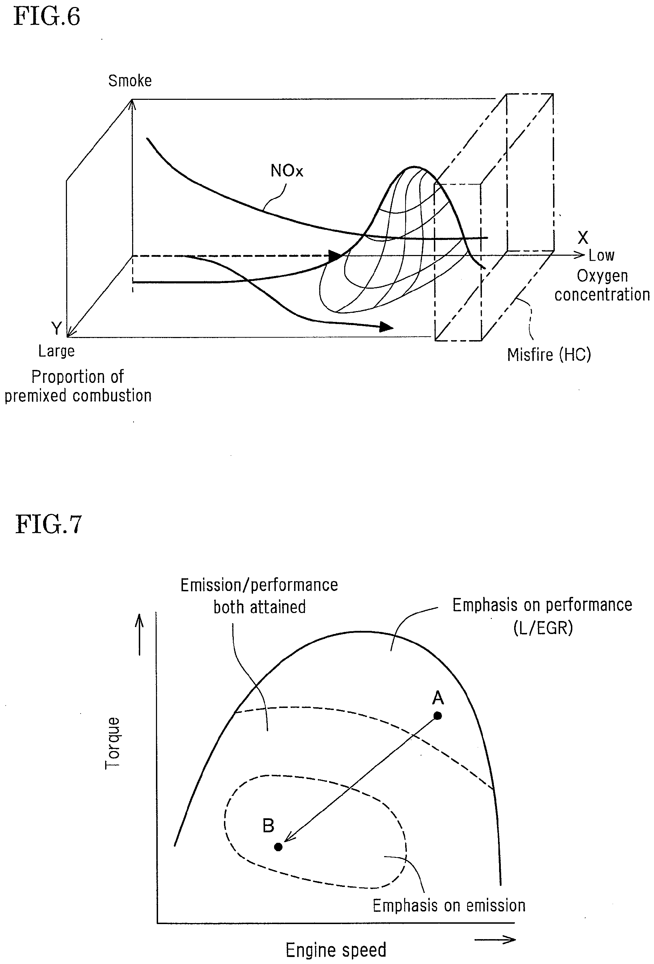

This point will now be described with reference to the illustration shown in FIG. 6. FIG. 6 three-dimensionally shows a smoke generating region, with the oxygen concentration (X axis) in a cylinder and the proportion of premixed combustion (Y axis) used as parameters. Here, the term "proportion of premixed combustion" refers to the proportion of the amount of heat generated in premixed combustion to the entire amount of heat generated during a combustion period.

First, in a state in which the pressure in a cylinder is spontaneously high (state in which the supercharging pressure is high), as only the oxygen concentration in the cylinder is lowered (transition along the X axis of FIG. 6 (thick dashed line)), the mound representing a smoke generating region is reached during the course of the oxygen concentration decrease, resulting in smoke generation in exhaust gas. Therefore, in conventional control, the oxygen concentration in the cylinder is kept above the lower limit using, for example, a guard value indicated by the dashed double-dotted line in FIG. 5 such that the smoke generating region is not reached even when the pre-ignition pressure in the cylinder is high, and thereby smoke is not generated in exhaust gas. With such conventional control, there is a limit to reduction in the amount of NOx generated.

On the other hand, as the oxygen concentration in the cylinder is lowered while the pre-ignition pressure in the cylinder is limited to being within the limited range (see FIG. 5), as indicated by the thick solid line in FIG. 6, the premixed combustion proportion (proportion of premixed combustion) is increased during the course of the oxygen concentration decrease, and therefore, as opposed to the case where only the oxygen concentration in the cylinder is lowered (conventional control), even when the level of oxygen concentration reduction in the cylinder is increased, a combustion form (region) that does not enter the mound representing the smoke generating region is reached. In this manner, the pre-ignition pressure in the cylinder is limited to being low, and it is thus possible to reduce the oxygen concentration in the cylinder more than conventional control can while suppressing smoke generation. Accordingly, suppression of the amount of smoke generated and suppression of the amount of NOx generated can be concurrently achieved, thereby enabling exhaust emissions to be improved.

### - Specific control procedures -

Next, specific control procedures employed when lowering the oxygen concentration in a cylinder will now be described.

A description is provided using as an example a case where the engine operating state is shifted from operation point A (an operation point where an emphasis is placed on performance, with the EGR rate being 0% (L/EGR)), to operation point B (an operation point for, for example, urban driving (mode driving)) as shown in FIG. 7.

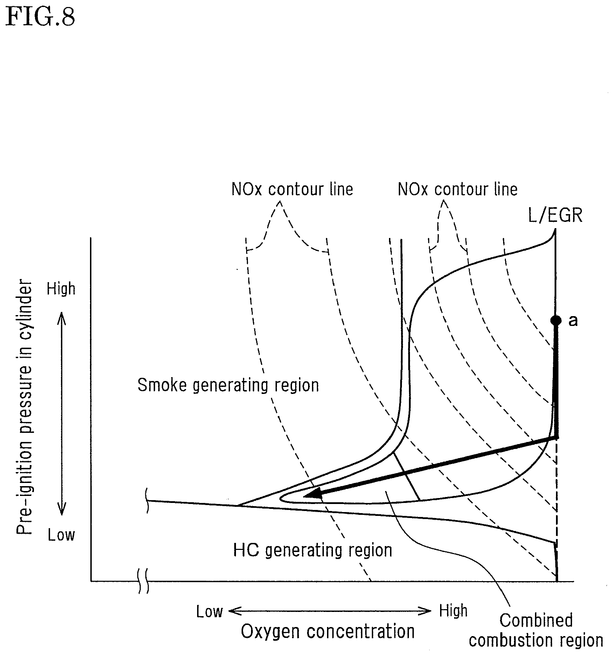

First, operation point A shown in FIG. 7 corresponds to the state indicated by point "a" in FIG. 8. Here, in this embodiment, in the case where an emphasis is placed on emission reduction, i.e., where demand exists for suppressing as much as possible both the amount of smoke generated and the amount of NOx generated, for example, in the case of urban driving (mode driving), the oxygen concentration in the cylinder and the pre-ignition pressure in the cylinder are lowered in combination such that the combustion form is shifted to the combined combustion region of FIG. 5. However, when the oxygen concentration in the cylinder and the pre-ignition pressure in the cylinder are simultaneously lowered, with the combined combustion region being a target, the smoke generating region may be reached during transition to the combined combustion region, thus generating smoke. Therefore, in this embodiment, the oxygen concentration in the cylinder and the pre-ignition pressure in the cylinder are lowered in a predetermined order such that the smoke generating region is not reached during transition to the combined combustion region (so as to be able to avoid the smoke generating region). A specific process therefor will now be described with reference to FIG. 8. The process described below is executed by the ECU 100.
(1) While the opening of the EGR valve 81 is fixed (the oxygen concentration in a cylinder is fixed), first, the opening of the nozzle vane (VN opening) provided in the variable nozzle vane mechanism 54 of the turbocharger 5 is increased to its limit to lower the boost pressure of the engine 1 (to reduce the amount of intake air), so only the pre-ignition pressure in the cylinder is lowered relative to the "state a" as shown in FIG. 8, i.e., a state in which the oxygen concentration in the cylinder and the pre-ignition pressure in the cylinder are higher than those in the combined combustion region (specific region). Moreover, the opening of the throttle valve (intake air throttle valve) 62 is made smaller to reduce the intake air amount and to lower the pre-ignition pressure in the cylinder to near the upper limit of the limited range (see FIG. 5). As the pre-ignition pressure in the cylinder is lowered in this manner, the fuel injection pattern changes and the combustion form shifts from "diffusion combustion" to "separated combustion."
   In this process, the reason the VN opening of the turbocharger 5 is adjusted first is to avoid a large loss that is generated if the opening of the throttle valve 62 (intake air throttle valve) is made smaller first while being highly supercharged.
   Here, in the pre-ignition pressure reducing process above, in the case where the pre-ignition pressure in the cylinder before transition to the combined combustion region is relatively small (the difference between the pre-ignition pressure in the cylinder before transition and the upper limit of the limited range is small) and the pre-ignition pressure in the cylinder can be lowered to near the upper limit of the limited range (see FIG. 5) merely by adjusting the NV opening of the turbocharger 5, reduction in the intake air amount by the adjustment of the opening of the throttle valve 62 does not need to be performed.
(2) While the VN opening of the turbocharger 5 and the opening of the throttle valve 62 are fixed, the opening of the EGR valve 81 is made larger to increase the EGR amount, so the oxygen concentration in the cylinder is reduced. At this time, the extent of reducing the oxygen concentration in the cylinder (steepness shown in FIG. 8) is adjusted in reference to the aforementioned map (a map created according to the diagram of FIG. 5), targeting the combined combustion region, thus reaching the combined combustion region. Note that in the course of reducing the oxygen concentration in the cylinder, the fuel injection pattern (combustion form) changes every moment.

As described above, in the case where transition to where an emphasis is placed on emission reduction is made, the pre-ignition pressure in the cylinder is limited, and the oxygen concentration in the cylinder is lowered to that of the combined combustion region, and it is thus possible to achieve reduction in the amount of NOx generated while suppressing the amount of smoke generated, thereby enabling exhaust emissions to be improved.

Here, if the pre-ignition pressure in the cylinder is excessively lowered when the pre-ignition pressure in the cylinder is lowered as described above, the HC generating region (see FIG. 5) may be reached, and thus the pre-ignition pressure in the cylinder is kept above the lower limit using a guard value (for example, 3 MPa) that takes the HC generating region in consideration to prevent HC generation.

Also, in the case where the pre-ignition pressure in the cylinder is kept above the lower limit in this manner, the lower limit guard value may be a fixed value, but it is preferable that the lower limit guard value is variably set. That is, when ignition delay occurs due to transient operation or fuel properties (for example, low-cetane fuel), HC is increased rapidly, and to prevent this, it is preferable to variably set a lower limit guard value according to the oxygen concentration in the cylinder before fuel injection. Specifically, in the case where the oxygen concentration in the cylinder is low, the lower limit guard value for the pre-ignition pressure in the cylinder is set to be higher than that of a case where the oxygen concentration in the cylinder is high. The oxygen concentration in the cylinder can be obtained based on the amount of intake air, temperature of intake air, supercharging pressure, EGR rate, etc.

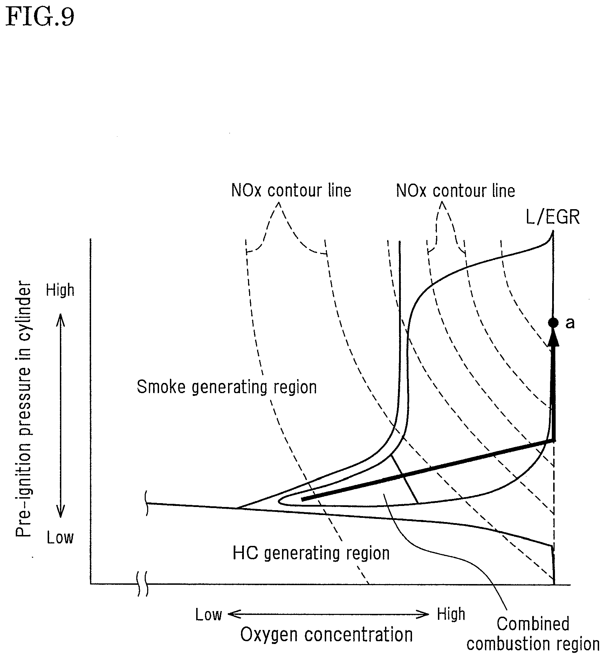

On the other hand, in the case where the oxygen concentration in the cylinder and the pre-ignition pressure in the cylinder are put into the "state a", i.e., a state in which the oxygen concentration in the cylinder and the pre-ignition pressure in the cylinder are higher than those in the combined combustion region (specific region) from a state within the combined combustion region, the above-described processes (1) and (2) are performed in an opposite order, i.e., the processes in which "the opening of the EGR valve 81 is made smaller to raise the oxygen concentration in the cylinder" → "the opening of the throttle valve 62 is made larger to raise the pre-ignition pressure in the cylinder" → "the VN opening of the turbocharger 5 is made smaller to raise the pre-ignition pressure in the cylinder" are performed sequentially, so the oxygen concentration and the pre-ignition pressure are put into the "state a" while the smoke generating region is avoided as shown in FIG. 9.

### - Other control procedures -

In the embodiment of FIG. 8 described above, when transitioning to the combined combustion region, the pre-ignition pressure in the cylinder is lowered and then the oxygen concentration in the cylinder is lowered. However, insofar as a route that can avoid the smoke generating region is taken, the control procedure for lowering the pre-ignition pressure in the cylinder and for lowering the oxygen concentration in the cylinder is not particularly limited.

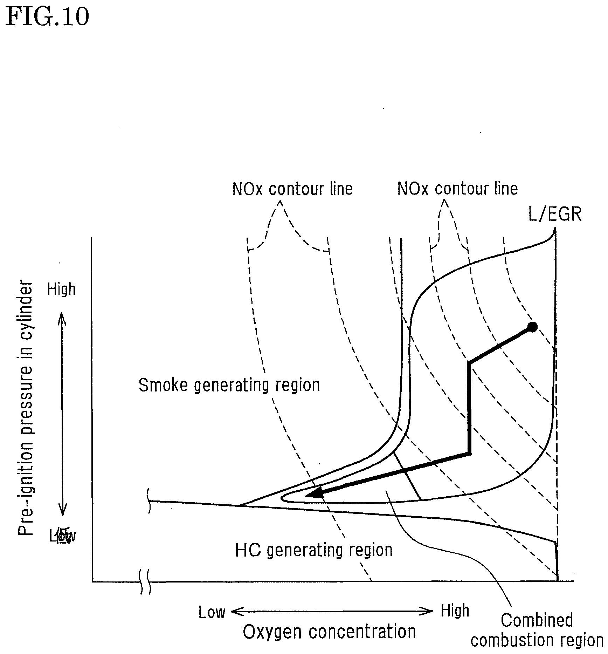

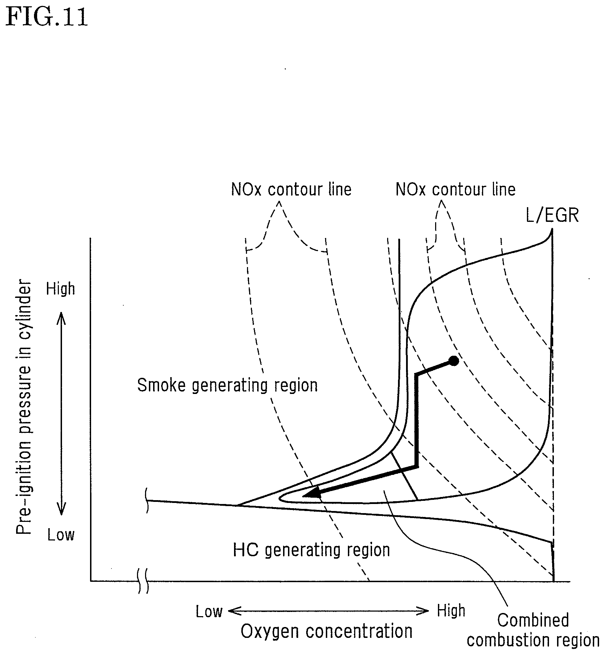

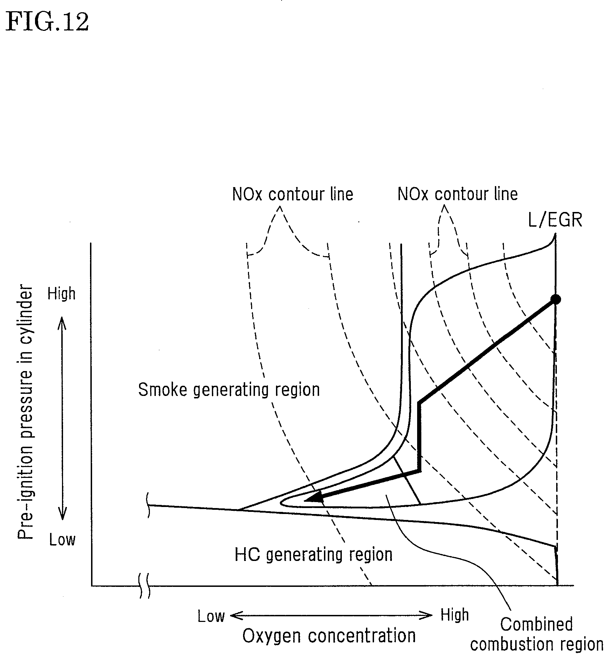

For example, it is possible that, as shown in FIG. 10, the oxygen concentration in the cylinder is lowered first, then the pre-ignition pressure in the cylinder is lowered to near the upper limit of the limited range (see FIG. 5), and thereafter the oxygen concentration in the cylinder is lowered such that the combined combustion region is reached. Alternatively, it is possible that, as shown in FIG. 11, the oxygen concentration in the cylinder is first lowered, so a state immediately above the smoke generating region is created, then the pre-ignition pressure in the cylinder is lowered to near the upper limit of the limited range (see FIG. 5), and thereafter the oxygen concentration in the cylinder is lowered such that the combined combustion region is reached. Moreover, it is possible that, as shown in FIG. 12, lowering of the oxygen concentration in the cylinder and lowering of the pre-ignition pressure in the cylinder are simultaneously controlled, so a state immediately before the smoke generating region is created, then the pre-ignition pressure in the cylinder is lowered, and thereafter the oxygen concentration in the cylinder is lowered such that the combined combustion region is reached.

Also, in the case where the oxygen concentration in the cylinder and the pre-ignition pressure in the cylinder are put into a state in which the oxygen concentration in the cylinder and the pre-ignition pressure in the cylinder are higher than those in the combined combustion region from a state within the combined combustion region, insofar as a route that can avoid the smoke generating region is taken, the control procedure for raising the pre-ignition pressure in the cylinder and for raising the oxygen concentration in the cylinder is not particularly limited.

### - Other embodiments -

In the embodiments above, the pre-ignition pressure in the cylinder is lowered or raised using a supercharging device or an intake air throttle valve, but the present invention is not limited to this configuration. In the case where the internal combustion engine is provided with a pressure varying mechanism that is capable of regulating the pressure in a cylinder, such as a variable valve timing (WT) mechanism, the pre-ignition pressure in the cylinder may be lowered or raised by the pressure varying mechanism. The fuel combustion control apparatus may also be configured such that the pre-ignition pressure in the cylinder is lowered or raised by the combination of such a pressure varying mechanism and the aforementioned supercharging device or intake air throttle valve.

In the embodiments above, a case was described in which the present invention was applied to a common rail in-cylinder direct injection multi-cylinder (four-cylinder) diesel engine. The present invention is not limited to this configuration, and is applicable to a diesel engine having a discretionary number of cylinders, such as a six-cylinder diesel engine. In addition, engines to which the present invention is applicable are not limited to automobile engines.

In the embodiments above, a description was provided of the engine 1 to which a piezo injector 23, which attains full valve opening only when an electric current is applied and thus changes the fuel injection rate, but the present invention is also applicable to engines to which variable injection rate injectors are applied.

### [Industrial Applicability]

The present invention is applicable to combustion control for suppressing the amount of smoke generated and the amount of NOx generated in a common rail in-cylinder direct injection multi-cylinder diesel engine mounted in an automobile.

### [Reference Signs List]

- 1: Engine (internal combustion engine)
- 3: Combustion chamber (cylinder)
- 23: Injector (fuel injection valve)
- 5: Turbocharger
- 54: Variable nozzle vane mechanism
- 62: Throttle valve
- 81: EGR valve
- 100: ECU

## Claims

1. A combustion control apparatus for a compression self-ignition internal combustion engine (1) in which fuel injected from a fuel injection valve (23) into a cylinder (3) is caused to combust in the cylinder (3), comprising:
oxygen concentration regulating means that is capable of regulating an oxygen concentration in the cylinder (3) before a fuel injection of the fuel injection valve (23);
pressure regulating means that is capable of regulating a pre-ignition pressure in the cylinder (3); **characterized by** gas state controlling means that, in the case where a specific region is targeted where the pre-ignition pressure in the cylinder (3) is limited to being no more than a predetermined pressure and where no smoke is generated even when the oxygen concentration is reduced, and where the oxygen concentration in the cylinder and the pre-ignition pressure in the cylinder are put into a state of the specific region from a state in which the oxygen concentration in the cylinder (3) and the pre-ignition pressure in the cylinder (3) are higher than those in the specific region, sets the oxygen concentration in the cylinder and the pre-ignition pressure in the cylinder (3) into a state of the specific region while avoiding a smoke generating region by lowering the pre-ignition pressure in the cylinder (3) by the pressure regulating means and thereafter lowering the oxygen concentration in the cylinder (3) by the oxygen concentration regulating means.

2. The combustion control apparatus for an internal combustion engine according to claim 1, wherein
in the case where the oxygen concentration in the cylinder (3) and the pre-ignition pressure in the cylinder (3) are put into a state of the specific region from a state in which the oxygen concentration in the cylinder (3) and the pre-ignition pressure in the cylinder (3) are higher than those in the specific region, lowering of the pre-ignition pressure in the cylinder (3) and lowering of the oxygen concentration in the cylinder (3) are performed simultaneously, so a state immediately before the smoke generating region is achieved, thereafter the pre-ignition pressure in the cylinder (3) is lowered, and then the oxygen concentration in the cylinder (3) is lowered.

3. The combustion control apparatus for an internal combustion engine (1) according to any one of claims 1 or 2, wherein
when the pre-ignition pressure in the cylinder (3) is lowered, a guard value is used to keep the pre-ignition pressure in the cylinder (3) above a lower limit.

4. The combustion control apparatus for an internal combustion engine (1) according to claim 3, wherein
the lower limit guard value of the pre-ignition pressure in the cylinder (3) is set in consideration of an HC generating region.

5. The combustion control apparatus for an internal combustion engine (1) according to claim 3 or 4, wherein
the lower limit guard value of the pre-ignition pressure in the cylinder (3) is variably set according to the oxygen concentration in the cylinder (3).

6. The combustion control apparatus for an internal combustion engine (1) according to claim 1, wherein
the gas state controlling means is provided also with a function to control the oxygen concentration in the cylinder (3) and the pre-ignition pressure in the cylinder (3) to be in a state in which the oxygen concentration in the cylinder (3) and the pre-ignition pressure in the cylinder (3) are higher than those in the specific region while avoiding a smoke generating region by controlling raising of the oxygen concentration in the cylinder (3) and raising of the pre-ignition pressure in the cylinder (3) in combination with the case where the oxygen concentration in the cylinder (3) and the pre-ignition pressure in the cylinder (3) are put into a state in which the oxygen concentration in the cylinder (3) and the pre-ignition pressure in the cylinder (3) are higher than those in the specific region from a state of the specific region.

7. The combustion control apparatus for an internal combustion engine (1) according to claim 6, wherein
in the case where the oxygen concentration in the cylinder (3) and the pre-ignition pressure in the cylinder (3) are put into a state in which the oxygen concentration in the cylinder (3) and the pre-ignition pressure in the cylinder (3) are higher than those in the specific region from a state of the specific region, the oxygen concentration in the cylinder (3) is raised and then the pre-ignition pressure in the cylinder (3) is raised.

8. The combustion control apparatus for an internal combustion engine (1) according to any one of claims 1 to 7, wherein
the oxygen concentration regulating means is an exhaust gas recirculating device that recirculates part of exhaust gas discharged into an exhaust system (7) of the internal combustion engine (1) into an intake system (6) and is configured such that the oxygen concentration in the cylinder (3) is lowered or raised by increasing or reducing an amount of exhaust gas recirculated into the intake system (6) by the exhaust gas recirculating device.

9. The combustion control apparatus for an internal combustion engine (1) according to any one of claims 1 to 8, wherein
the pressure regulating means is a supercharging device that supercharges intake air in an intake system (6), and is configured such that the pre-ignition pressure in the cylinder (3) is lowered or raised by reducing or increasing an intake air amount by the supercharging device.

10. The combustion control apparatus for an internal combustion engine (1) according to any one of claims 1 to 8, wherein
the pressure regulating means is an intake air throttle valve (62) that regulates an intake air amount in an intake system (6), and is configured such that the pre-ignition pressure in the cylinder (3) is lowered or raised by reducing or increasing the intake air amount by the intake air throttle valve (62).

11. The combustion control apparatus for an internal combustion engine (1) according to claim 9 or 10, wherein
the combustion control apparatus is provided with the supercharging device and the intake air throttle valve (62), and is configured such that the pre-ignition pressure in the cylinder (3) is lowered or raised by combination of reduction or increase in intake air amount by the supercharging device and reduction or increase in intake air amount by the intake air throttle valve (62).

## Patentansprüche

1. Verbrennungssteuerungsvorrichtung für einen Verdichtungsselbstzündungs-Verbrennungsmotor (1), in dem ein von einem Kraftstoffeinspritzventil (23) in einen Zylinder (3) eingespritzter Kraftstoff dazu veranlasst wird, in dem Zylinder (3) zu verbrennen, die Folgendes aufweist:
ein Sauerstoffkonzentrationsregelungsmittel, das in der Lage ist, eine Sauerstoffkonzentration in dem Zylinder (3) vor einer Kraftstoffeinspritzung des Kraftstoffeinspritzventils (23) zu regulieren;
ein Druckregelungsmittel, das in der Lage ist, einen Vorzündungsdruck in dem Zylinder (3) zu regeln;
**gekennzeichnet durch**
ein Gaszustandssteuerungsmittel, das, in dem Fall, in dem auf einen bestimmten Bereich abgezielt wird, in dem der Vorzündungsdruck in dem Zylinder (3) darauf beschränkt ist, nicht mehr als ein vorbestimmter Druck zu sein, und in dem selbst dann kein Rauch erzeugt wird, wenn die Sauerstoffkonzentration verringert ist, und in dem die Sauerstoffkonzentration in dem Zylinder und der Vorzündungsdruck in dem Zylinder von einem Zustand, in dem die Sauerstoffkonzentration in dem Zylinder (3) und der Vorzündungsdruck in dem Zylinder (3) höher sind als diejenigen in dem bestimmten Bereich, in einen Zustand des bestimmten Bereichs versetzt sind, die Sauerstoffkonzentration in dem Zylinder und den Vorzündungsdruck in dem Zylinder (3) in einen Zustand des bestimmten Bereichs einstellt, während es einen Raucherzeugungsbereich vermeidet, indem der Vorzündungsdruck in dem Zylinder (3) durch das Druckregelungsmittel abgesenkt wird und danach die Sauerstoffkonzentration in dem Zylinder (3) durch das Sauerstoffkonzentrationsregelungsmittel abgesenkt wird.

2. Verbrennungssteuerungsvorrichtung für einen Verbrennungsmotor nach Anspruch 1, wobei
in dem Fall, in dem die Sauerstoffkonzentration in dem Zylinder (3) und der Vorzündungsdruck in dem Zylinder (3) von einem Zustand, in dem die Sauerstoffkonzentration in dem Zylinder (3) und der Vorzündungsdruck in dem Zylinder (3) höher sind als diejenigen in dem bestimmten Bereich, in einen Zustand des bestimmten Bereichs versetzt sind, eine Absenkung des Vorzündungsdrucks in dem Zylinder (3) und eine Absenkung der Sauerstoffkonzentration in dem Zylinder (3) gleichzeitig durchgeführt werden, sodass ein Zustand unmittelbar vor dem Raucherzeugungsbereich erreicht wird, danach der Vorzündungsdruck in dem Zylinder (3) abgesenkt wird und dann die Sauerstoffkonzentration in dem Zylinder (3) abgesenkt wird.

3. Verbrennungssteuerungsvorrichtung für einen Verbrennungsmotor (1) nach einem der Ansprüche 1 oder 2, wobei
wenn der Vorzündungsdruck in dem Zylinder (3) abgesenkt ist, ein Schutzwert verwendet wird, um den Vorzündungsdruck in dem Zylinder (3) oberhalb eines unteren Grenzwerts zu halten.

4. Verbrennungssteuerungsvorrichtung für einen Verbrennungsmotor (1) nach Anspruch 3, wobei
der Unterer-Grenzwert-Schutzwert des Vorzündungsdrucks in dem Zylinder (3) unter Berücksichtigung eines HC-Erzeugungsbereichs eingestellt ist.

5. Verbrennungssteuerungsvorrichtung für einen Verbrennungsmotor (1) nach Anspruch 3 oder 4, wobei
der Unterer-Grenzwert-Schutzwert des Vorzündungsdrucks in dem Zylinder (3) gemäß der Sauerstoffkonzentration in dem Zylinder (3) variabel eingestellt ist.

6. Verbrennungssteuerungsvorrichtung für einen Verbrennungsmotor (1) nach Anspruch 1, wobei
das Gaszustandssteuerungsmittel zudem mit einer Funktion versehen ist, die Sauerstoffkonzentration in dem Zylinder (3) und den Vorzündungsdruck in dem Zylinder (3) so zu steuern, dass sie sich in einem Zustand befinden, in dem die Sauerstoffkonzentration in dem Zylinder (3) und der Vorzündungsdruck in dem Zylinder (3) höher sind als diejenigen in dem bestimmten Bereich, während ein Raucherzeugungsbereich vermieden wird, indem eine Anhebung der Sauerstoffkonzentration in dem Zylinder (3) und eine Anhebung des Vorzündungsdrucks in dem Zylinder (3) in Kombination mit dem Fall gesteuert werden, in dem die Sauerstoffkonzentration in dem Zylinder (3) und der Vorzündungsdruck in dem Zylinder (3) von einem Zustand des bestimmten Bereichs in einen Zustand versetzt sind, in dem die Sauerstoffkonzentration in dem Zylinder (3) und der Vorzündungsdruck in dem Zylinder (3) höher sind als diejenigen in dem bestimmten Bereich.

7. Verbrennungssteuerungsvorrichtung für einen Verbrennungsmotor (1) nach Anspruch 6, wobei
in dem Fall, in dem die Sauerstoffkonzentration in dem Zylinder (3) und der Vorzündungsdruck in dem Zylinder (3) von einem Zustand des bestimmten Bereichs in einen Zustand versetzt sind, in dem die Sauerstoffkonzentration in dem Zylinder (3) und der Vorzündungsdruck in dem Zylinder (3) höher sind als diejenigen in dem bestimmten Bereich, die Sauerstoffkonzentration in dem Zylinder (3) angehoben wird und dann der Vorzündungsdruck in dem Zylinder (3) angehoben wird.

8. Verbrennungssteuerungsvorrichtung für einen Verbrennungsmotor (1) nach einem der Ansprüche 1 bis 7, wobei
das Sauerstoffkonzentrationsregelungsmittel ein Abgasrückführungsgerät ist, dass einen Teil eines in ein Abgassystem (7) des Verbrennungsmotors (1) abgelassene Abgas in ein Einlasssystem (6) zurückführt und derart konfiguriert ist, dass die Sauerstoffkonzentration in dem Zylinder (3) abgesenkt oder angehoben wird, indem eine Menge des in das Einlasssystem (6) zurückgeführte Abgases durch das Abgasrückführungsgerät erhöht oder verringert wird.

9. Verbrennungssteuerungsvorrichtung für einen Verbrennungsmotor (1) nach einem der Ansprüche 1 bis 8, wobei
das Druckregelungsmittel ein Aufladungsgerät ist, dass eine Einlassluft in einem Einlasssystem (6) auflädt, und derart konfiguriert ist, dass der Vorzündungsdruck in dem Zylinder (3) abgesenkt oder angehoben wird, indem eine Einlassluftmenge durch das Aufladungsgerät verringert oder erhöht wird.

10. Verbrennungssteuerungsvorrichtung für einen Verbrennungsmotor (1) nach einem Ansprüche 1 bis 8, wobei
das Druckregelungsmittel ein Einlassluftdrosselventil (62) ist, dass eine Einlassluftmenge in einem Einlasssystem (6) regelt, und derart konfiguriert ist, dass der Vorzündungsdruck in dem Zylinder (3) abgesenkt oder angehoben wird, indem die Einlassluftmenge durch das Einlassluftdrosselventil (62) erhöht oder verringert wird.

11. Verbrennungssteuerungsvorrichtung für einen Verbrennungsmotor (1) nach Anspruch 9 oder 10, wobei
die Verbrennungssteuerungsvorrichtung mit dem Aufladungsgerät und dem Einlassluftdrosselventil (62) versehen ist und derart konfiguriert ist, dass der Vorzündungsdruck in dem Zylinder (3) durch eine Kombination einer Verringerung oder Erhöhung der Einlassluftmenge durch das Aufladungsgerät und einer Verringerung oder Erhöhung der Einlassluftmenge durch das Einlassluftdrosselventil (62) abgesenkt oder angehoben wird.

## Revendications

1. Appareil de commande de combustion pour un moteur à combustion interne à autoallumage par compression (1) dans lequel le carburant injecté par une soupape d'injection de carburant (23) dans un cylindre (3) est amené à brûler dans le cylindre (3), comprenant :
un moyen de régulation de concentration d'oxygène qui est capable de réguler une concentration d'oxygène dans le cylindre (3) avant une injection de carburant de la soupape d'injection de carburant (23) ;
un moyen de régulation de pression qui est capable de réguler une pression de pré-allumage dans le cylindre (3) ;
**caractérisé par** :
un moyen de contrôle d'état de gaz qui, dans le cas dans lequel une région spécifique est ciblée dans laquelle la pression de pré-allumage dans le cylindre (3) est limitée pour ne pas être supérieure à une pression prédéterminée et dans laquelle aucune fumée n'est générée même lorsque la concentration d'oxygène est réduite, et dans laquelle la concentration d'oxygène dans le cylindre et la pression de pré-allumage dans le cylindre sont placées dans un état de la région spécifique à partir d'un état dans lequel la concentration d'oxygène dans le cylindre (3) et la pression de pré-allumage dans le cylindre (3) sont supérieures à celles dans la région spécifique, détermine la concentration d'oxygène dans le cylindre et la pression de pré-allumage dans le cylindre (3) dans un état de la région spécifique tout en évitant une région de génération de fumée en abaissant la pression de pré-allumage dans le cylindre (3) grâce au moyen de régulation de pression et en abaissant ensuite la concentration d'oxygène dans le cylindre (3) grâce au moyen de régulation de concentration d'oxygène.

2. Appareil de commande de combustion pour un moteur à combustion interne selon la revendication 1, dans lequel :
dans le cas dans lequel la concentration d'oxygène dans le cylindre (3) et la pression de pré-allumage dans le cylindre (3) sont placées dans un état de la région spécifique à partir d'un état dans lequel la concentration d'oxygène dans le cylindre (3) et la pression de pré-allumage dans le cylindre (3) sont supérieures à celles dans la région spécifique, l'abaissement de la pression de pré-allumage dans le cylindre (3) et l'abaissement de la concentration d'oxygène dans le cylindre (3) sont réalisés simultanément, de sorte que l'on obtient un état immédiatement avant la région de génération de fumée, après quoi la pression de pré-allumage dans le cylindre (3) est abaissée, et ensuite la concentration d'oxygène dans le cylindre (3) est abaissée.

3. Appareil de commande de combustion pour un moteur à combustion interne (1) selon l'une quelconque des revendications 1 ou 2, dans lequel :
lorsque la pression de pré-allumage dans le cylindre (3) est abaissée, on utilise une valeur de protection pour maintenir la pression de pré-allumage dans le cylindre (3) au-dessus d'une limite inférieure.

4. Appareil de commande de combustion pour un moteur à combustion interne (1) selon la revendication 3, dans lequel :
la valeur de protection de limite inférieure de la pression de pré-allumage dans le cylindre (3) est déterminée en prenant en considération une région de génération de HC.

5. Appareil de commande de combustion pour un moteur à combustion interne (1) selon la revendication 3 ou 4, dans lequel :
la valeur de protection de limite inférieure de la pression de pré-allumage dans le cylindre (3) est déterminée, en variante, selon la concentration d'oxygène dans le cylindre (3) .

6. Appareil de commande de combustion pour un moteur à combustion interne (1) selon la revendication 1, dans lequel :
le moyen de régulation d'état de gaz est prévu également avec une fonction pour réguler la concentration d'oxygène dans le cylindre (3) et la pression de pré-allumage dans le cylindre (3) pour qu'elles soient dans un état dans lequel la concentration d'oxygène dans le cylindre (3) et la pression de pré-allumage dans le cylindre (3) sont supérieures à celles dans la région spécifique tout en évitant une région de génération de fumée en régulant l'augmentation de la concentration d'oxygène dans le cylindre (3) et l'augmentation de la pression de pré-allumage dans le cylindre (3) en combinaison avec le cas dans lequel la concentration d'oxygène dans le cylindre (3) et la pression de pré-allumage dans le cylindre (3) sont placées dans un état dans lequel la concentration d'oxygène dans le cylindre (3) et la pression de pré-allumage dans le cylindre (3) sont supérieures à celles dans la région spécifique à partir d'un état de la région spécifique.

7. Appareil de commande de combustion pour un moteur à combustion interne (1) selon la revendication 6, dans lequel :
dans le cas dans lequel la contraction d'oxygène dans le cylindre (3) et la pression de pré-allumage dans le cylindre (3) sont placées dans un état dans lequel la concentration d'oxygène dans le cylindre (3) et la pression de pré-allumage dans le cylindre (3) sont supérieures à celles dans la région spécifique à partir d'un état de la région spécifique, la concentration d'oxygène dans le cylindre (3) est augmentée et ensuite la pression de pré-allumage dans le cylindre (3) est augmentée.

8. Appareil de commande de combustion pour un moteur à combustion interne (1) selon l'une quelconque des revendications 1 ou 7, dans lequel :
le moyen de régulation de concentration d'oxygène est un dispositif de recirculation de gaz d'échappement qui recircule une partie de gaz d'échappement déchargé dans le système d'échappement (7) du moteur à combustion interne (1) dans un système d'admission (6) et est configuré de sorte que la concentration d'oxygène dans le cylindre (3) est abaissée ou augmentée en augmentant ou en réduisant une quantité de gaz d'échappement recirculé dans le système d'admission (6) par le dispositif de recirculation de gaz d'échappement.

9. Appareil de commande de combustion pour un moteur à combustion interne (1) selon l'une quelconque des revendications 1 ou 8, dans lequel :
le moyen de régulation de pression est un dispositif de suralimentation qui suralimente l'air d'admission dans un système d'admission (6), et est configuré de sorte que la pression de pré-allumage dans le cylindre (3) est abaissée au augmentée en réduisant ou en augmentant une quantité d'air d'admission par le dispositif de suralimentation.

10. Appareil de commande de combustion pour un moteur à combustion interne (1) selon l'une quelconque des revendications 1 ou 8, dans lequel :
le moyen de régulation de pression est un papillon des gaz d'air d'admission (62) qui régule une quantité d'air d'admission dans un système d'admission (6) et est configuré de sorte que la pression de pré-allumage dans le cylindre (3) est abaissée ou augmentée en réduisant ou en augmentant la quantité d'air d'admission par le papillon des gaz d'air d'admission (62).

11. Appareil de commande de combustion pour un moteur à combustion interne (1) selon la revendication 9 ou 10, dans lequel :
l'appareil de commande de combustion est prévu avec un dispositif de suralimentation et le papillon des gaz d'air d'admission (62), et est configuré de sorte que la pression de pré-allumage dans le cylindre (3) est abaissée ou augmentée par la combinaison de la réduction ou de l'augmentation de la quantité d'air d'admission par le dispositif de suralimentation et la réduction ou l'augmentation de la quantité d'air d'admission par le papillon de gaz d'air d'admission (62).
